# EUROPEAN PATENT APPLICATION

(11) **EP 4 175 381 A1**
(43) Date of publication of application: **03.05.2023**
(21) Application number: 20943382.0
(22) Date of filing: 29.06.2020
(51) Int. Cl.: H04W 72/04, H04W 92/20

(54) **WIRELESS COMMUNICATION NODE**

(71) Applicant: NTT DOCOMO, INC., Tokyo 100-6150 (JP)
(72) Inventor: KURITA Daisuke, Tokyo 100-6150 (JP); HARADA Hiroki, Tokyo 100-6150 (JP); SUN Weiqi, Beijing 100190 (CN); WANG Jing, Beijing 100190 (CN); HOU Xiaolin, Beijing 100190 (CN)
(74) Representative: Hoffmann Eitle
(86) International application number: PCT/JP2020/025532
(87) International publication number: WO 2022/003781

(57) **Abstract**

A radio communication node (100B) receives, from a network, configuration information indicating whether or not simultaneous transmission and reception by frequency division multiplexing in a first radio link with an upper node and a second radio link with a lower node is possible. The radio communication node (100B) establishes the first radio link and the second radio link based on the configuration information.

## Description

### Technical Field

The present disclosure relates to a radio communication node that configures radio access and radio backhaul.

### Background Art

The 3rd Generation Partnership Project (3GPP) specifies the 5th generation mobile communication system (5G) (which is also called New Radio (NR) or Next Generation (NG)), and specification of the next generation called Beyond 5G, 5G Evolution, or 6G has been conducted.

For example, in a radio access network (RAN) of NR, Integrated Access and Backhaul (IAB) in which radio access to a terminal (User Equipment (UE)) and radio backhaul between radio communication nodes such as radio base stations (gNBs) are integrated is specified (see Non Patent Literature 1).

In the IAB, an IAB node includes a Mobile Termination (MT) that is a function for connection to a parent node (which may also be called an IAB donor) and a Distributed Unit (DU) that is a function for connection to a child node or UE.

In Release 17 of 3GPP, it is planned to support simultaneous transmission and reception using frequency-division multiplexing (FDM) via a radio link (Link_parent) between the parent node and the IAB node, that is, the MT, and a radio link (Link_child) between the IAB node and the child node, that is, the DU.

### Citation List

### Non Patent Literature

Non Patent Literature 1: 3GPP TS 38.213 V16.1.0 3rd Generation Partnership Project; Technical Specification Group Radio Access Network; NR; Physical layer procedures for control (Release 16), 3GPP, March 2020

### Summary of Invention

However, the realization of the simultaneous transmission and reception in the MT and the DU using the FDM as described above has the following problems. Specifically, a radio communication node configuring the IAB node determines whether or not a DU resource (specifically, frequency resource) allocated to Link_child can be applied to the simultaneous transmission and reception with the MT using the FDM.

The following disclosure has been made in view of such a situation, and an object of the present disclosure is to provide a radio communication node capable of performing appropriate simultaneous transmission and reception using FDM in a MT and a DU.

An aspect of the present disclosure is a radio communication node (radio communication node 100B) including: a receiving unit (radio receiving unit 162) that receives, from a network, configuration information indicating whether or not simultaneous transmission and reception by frequency division multiplexing in a first radio link with an upper node and a second radio link with a lower node is possible; and a control unit (control unit 190) that establishes the first radio link and the second radio link based on the configuration information.

An aspect of the present disclosure is a radio communication node (radio communication node 100B) including: a receiving unit (radio receiving unit 162) that receives, from a network, resource information indicating types of a time resource and a frequency resource to be allocated to a first radio link with an upper node and a second radio link with a lower node; and a control unit (control unit 190) that performs simultaneous transmission and reception by frequency division multiplexing in the first radio link and the second radio link by using the time resource and the frequency resource in a case where both the type of the time resource and the type of the frequency resource are indicated as available for the second radio link.

### Brief Description of Drawings

Fig. 1 is an overall schematic configuration diagram of a radio communication system 10.
Fig. 2 is a diagram illustrating a basic configuration example of IAB.
Fig. 3 is a functional block configuration diagram of a radio communication node 100A.
Fig. 4 is a functional block configuration diagram of a radio communication node 100B.
Fig. 5A is a diagram illustrating a usage example of frequency resources of a DU serving cell and a MT serving cell based on Assumption 1.
Fig. 5B is a diagram illustrating a usage example of frequency resources of a DU serving cell and a MT serving cell based on Assumption 2.
Fig. 5C is a diagram illustrating a usage example of frequency resources of a DU serving cell and a MT serving cell based on Assumption 3.
Fig. 6 is a diagram illustrating a schematic communication sequence related to DU resource configuration of an IAB node.
Fig. 7A is a diagram illustrating an indication example of DU resources according to a modified example (Alt. 1) of Operation Example 2.
Fig. 7B is a diagram illustrating an indication example of DU resources according to a modified example (Alt. 2) of Operation Example 2.
Fig. 8 is a diagram illustrating an example of a hardware configuration of a CU 50, radio communication nodes 100A to 100C, and a UE 200.

### Description of Embodiments

Hereinafter, embodiments will be described with reference to the drawings. Note that the same functions or configurations are denoted by the same or similar reference numerals, and description thereof is omitted as appropriate.

### (1) Overall Schematic Configuration of Radio Communication System

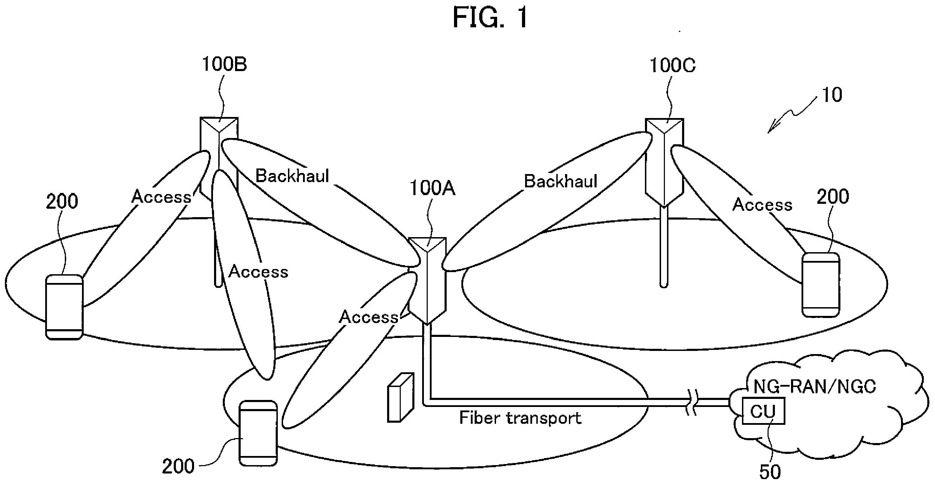

Fig. 1 is an overall schematic configuration diagram of a radio communication system 10 according to the present embodiment. The radio communication system 10 is a radio communication system according to 5G New Radio (NR), and includes a plurality of radio communication nodes and a terminal.

Specifically, the radio communication system 10 includes radio communication nodes 100A, 100B, and 100C and a user terminal 200 (hereinafter, referred to as UE 200).

The radio communication nodes 100A, 100B, and 100C can configure radio access to the UE 200 and radio backhaul (BH) between corresponding radio communication nodes. Specifically, backhaul (transmission path) by a radio link is configured between the radio communication node 100A and the radio communication node 100B, and between the radio communication node 100A and the radio communication node 100C.

Such a configuration in which the radio access to the UE 200 and the radio backhaul between corresponding radio communication nodes are integrated is called Integrated Access and Backhaul (IAB).

The IAB reuses an existing function and interface defined for radio access. In particular, a Mobile Termination (MT), a gNB-Distributed Unit (DU), a gNB-Central Unit (CU), a User Plane Function (UPF), an Access and Mobility Management Function (AMF) and Session Management Function (SMF), and a corresponding interface such as NR Uu (between a MT and a gNB/DU), F1, NG, X2, or N4 may be used as a base line.

The radio communication node 100A is connected to an NR radio access network (NG-RAN) and a core network (Next Generation Core (NGC) or 5GC) via a wired transmission path such as a fiber transport. The NG-RAN/NGC includes a central unit 50 (hereinafter, referred to as CU 50) that is a communication node. Note that the NG-RAN and the NGC may be simply referred to as a "network".

Note that the CU 50 may be configured by any one of the above-described UPF, AMF, or SMF or a combination thereof. Alternatively, the CU 50 may be the gNB-CU as described above.

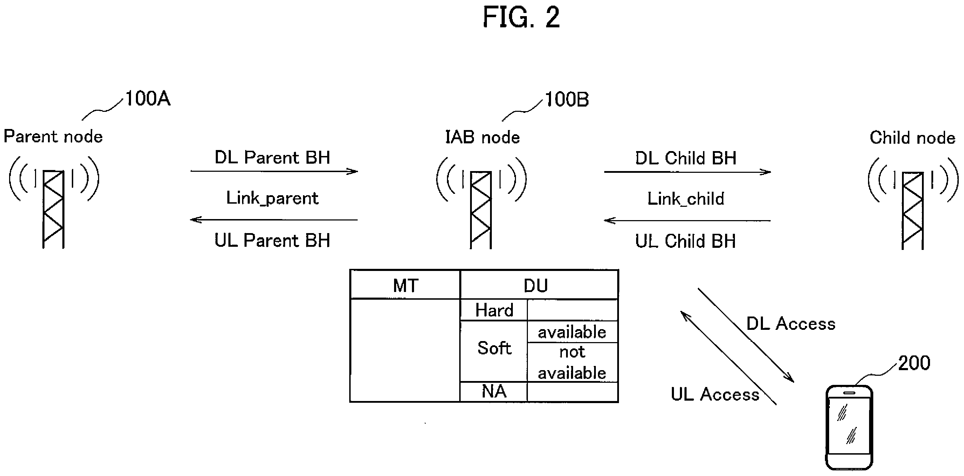

Fig. 2 is a diagram illustrating a basic configuration example of the IAB. As illustrated in Fig. 2, in the present embodiment, the radio communication node 100A configures a parent node in the IAB, and the radio communication node 100B (and the radio communication node 100C) configures an IAB node in the IAB.

Note that the parent node may be called an upper node in relation to the IAB node. Further, the parent node may be referred to as an IAB donor. In addition, the IAB node may be called a lower node in relation to the parent node.

A child node in the IAB is configured by another radio communication node that is not illustrated in Fig. 1. Alternatively, the UE 200 may configure the child node. The IAB node may be called an upper node in relation to the child node, and the child node may be called a lower node in relation to the IAB node.

A radio link is established between the parent node and the IAB node. Specifically, a radio link called Link_parent is established.

A radio link is established between the IAB node and the child node. Specifically, a radio link called Link_child is established.

Such a radio link established between radio communication nodes may be called a radio backhaul link. Link_parent is constituted by DL parent BH (downlink) and UL parent BH (uplink). Link_child is constituted by DL child BH (downlink) and UL child BH (uplink).

Note that a radio link established between the UE 200 and the IAB node or the parent node is called a radio access link. Specifically, the radio link is constituted by DL Access (downlink) and UL Access (uplink).

The IAB node includes a Mobile Termination (MT) that is a function for connection to the parent node and a Distributed Unit (DU) that is a function for connection to the child node (or the UE 200). Note that, although not illustrated in Fig. 2, the parent node and the child node also each include a MT and a DU.

As for radio resources used by the DU, from the perspective of DU, a downlink (DL) resource, an uplink (UL) resource, and a flexible time-resource (D/U/F) are classified into any type of hard, soft or not available (H/S/NA). Further, in soft (S), available or not available is specified.

The flexible time-resource (F) is a time resource that is available for both DL and UL. Further, "hard" is a radio resource configuration in which a corresponding time resource is always available for a DU child link connected to the child node or UE, and "soft" is a radio resource (DU resource) configuration in which the availability of a corresponding time resource for the DU child link is explicitly or implicitly controlled by the parent node.

Furthermore, in a case of soft (S), a radio resource as a notification target can be determined based on whether it is IA or INA.

"IA" means that the DU resource is explicitly or implicitly indicated as available. "INA" means that the DU resource is explicitly or implicitly indicated as not available.

Note that the configuration example of the IAB illustrated in Fig. 2 uses CU/DU division, but the configuration of the IAB is not necessarily limited to such a configuration. For example, the IAB may be configured by tunneling using GPRS Tunneling Protocol (GTP)-U/User Datagram Protocol (UDP)/Internet Protocol (IP) for the radio backhaul.

The main advantage of such an IAB is that NR cells can be flexibly and densely arranged without densifying a transport network. The IAB can be applied to various scenarios such as outdoor small cell deployment, indoor small cell deployment, and supporting of a mobile relay (for example, in a bus or train).

The IAB may also support NR-only stand-alone (SA) deployment, or non-stand-alone (NSA) deployment including other RATs (such as LTE), as illustrated in Figs. 1 and 2.

In the present embodiment, the radio access and the radio backhaul may be half-duplex communication or full-duplex communication. Further, as a multiplexing scheme, time-division multiplexing (TDM), space-division multiplexing (SDM), and frequency-division multiplexing (FDM) can be used.

When the IAB node is operated in the half-duplex communication, the DL parent BH is a receiving (RX) side, the UL parent BH is a transmitting (TX) side, the DL child BH is a transmitting (TX) side, and the UL child BH is a receiving (RX) side. Further, in a case of time division duplex (TDD), a DL/UL configuration pattern in the IAB node is not limited to only DL-F-UL, and a configuration pattern such as UL-F-DL may be applied only to the radio backhaul (BH).

Further, in the present embodiment, simultaneous operation of the DU and the MT of the IAB node is realized by using the SDM/FDM.

### (2) Functional Block Configuration of Radio Communication System

Next, the functional block configurations of the radio communication node 100A and the radio communication node 100B included in the radio communication system 10 will be described.

### (2.1) Radio Communication Node 100A

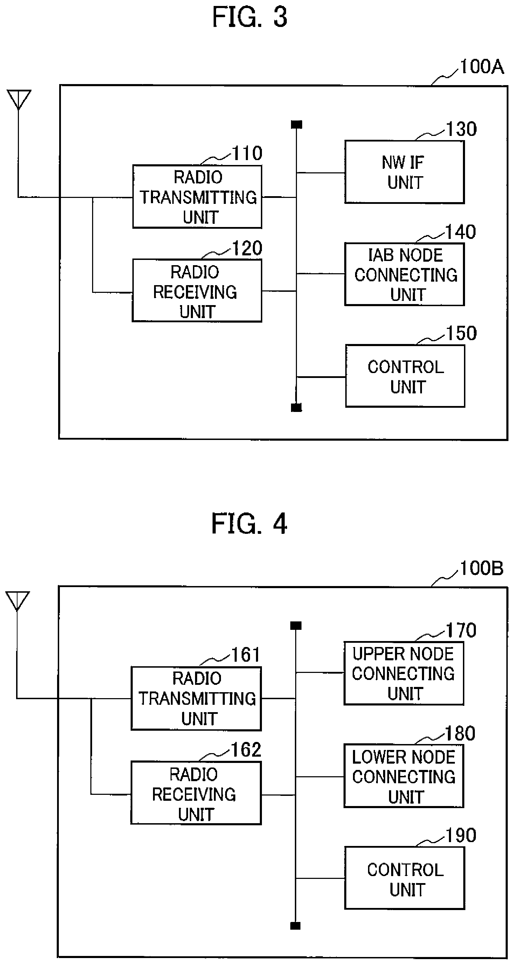

Fig. 3 is a functional block configuration diagram of the radio communication node 100A that configures the parent node. As illustrated in Fig. 3, the radio communication node 100A includes a radio transmitting unit 110, a radio receiving unit 120, a NW IF unit 130, an IAB node connecting unit 140, and a control unit 150.

The radio transmitting unit 110 transmits a radio signal according to the 5G specification. The radio receiving unit 120 transmits a radio signal according to the 5G specification. In the present embodiment, the radio transmitting unit 110 and the radio receiving unit 120 perform radio communication with the radio communication node 100B that configures the IAB node.

In the present embodiment, the radio communication node 100A has the functions of the MT and the DU, and the radio transmitting unit 110 and the radio receiving unit 120 also transmit and receive a radio signal according to the MT/DU.

The radio transmitting unit 110 and the radio receiving unit 120 can perform half duplex or full duplex radio communication. Further, the radio transmitting unit 110 and the radio receiving unit 120 can perform radio communication according to the FDM and SDM, in addition to the TDM (TDD) .

The NW IF unit 130 provides a communication interface that realizes connection to the NGC or the like. For example, the NW IF unit 130 can include an interface such as X2, Xn, N2, or N3.

The IAB node connecting unit 140 provides an interface or the like that realizes connection to the IAB node (or a child node including a UE). Specifically, the IAB node connecting unit 140 provides the function of the distributed unit (DU). That is, the IAB node connecting unit 140 is used for connection to the IAB node (or the child node).

Note that the IAB node may be expressed as a RAN node that supports the radio access to the UE 200 and wirelessly backhauls access traffic. The parent node, that is, the IAB donor, may also be expressed as a RAN node that provides an interface of a UE for the core network and a function for radio backhaul to the IAB node.

The control unit 150 controls each functional block included in the radio communication node 100A. Particularly, in the present embodiment, the control unit 150 performs a control related to establishment of the radio link with the IAB node (radio communication node 100B).

Specifically, the control unit 150 can determine DU resources (which may also be referred to as radio resources) to be allocated to a radio link with the IAB node, the radio link being established with the function of the DU.

The resources may include a time resource in a time direction and a frequency resource in a frequency direction.

The time resource is a resource in the time direction, and a symbol, a slot, a subframe, or the like may be a unit thereof. The time direction may also be referred to as a time domain, a symbol duration, a symbol time, or the like. Note that the symbol may also be referred to as an Orthogonal Frequency Division Multiplexing (OFDM) symbol.

The frequency resource is a resource in the frequency direction, and a resource block, a resource block group, a subcarrier, or the like may be a unit thereof. Further, the frequency direction may also be referred to as a frequency domain, a resource block, a resource block group, a subcarrier, a bandwidth part (BWP), or the like.

### (2.2) Radio Communication Node 100B

Fig. 4 is a functional block configuration diagram of the radio communication node 100B that configures the IAB node. As illustrated in Fig. 4, the radio communication node 100B includes a radio transmitting unit 161, a radio receiving unit 162, an upper node connecting unit 170, a lower node connecting unit 180, and a control unit 190.

As described above, the radio communication node 100B includes functional blocks similar to those of the radio communication node 100A (parent node) described above, but is different from the radio communication node 100A in that the radio communication node 100B includes the upper node connecting unit 170 and the lower node connecting unit 180, and the control unit 190 has a different function.

The radio transmitting unit 161 transmits a radio signal according to the 5G specification. The radio receiving unit 162 transmits a radio signal according to the 5G specification. In the present embodiment, the radio transmitting unit 161 and the radio receiving unit 162 perform radio communication with the radio communication node 100A that configures the parent node and radio communication with the child node (or the UE 200).

Similarly to the radio communication node 100A (parent node), the radio transmitting unit 161 and the radio receiving unit 162 can perform half duplex and full duplex radio communication, and radio communication according to the FDM and SDM, in addition to the TDM (TDD).

In the present embodiment, the radio receiving unit 162 can receive, from the network, configuration information indicating whether or not simultaneous transmission and reception by the FDM in a radio link (first radio link (Link_parent)) with the upper node and a radio link (second radio link (Link_child)) with the lower node is possible. In the present embodiment, the radio receiving unit 162 configures a receiving unit.

Further, the radio receiving unit 162 can receive, from the network, resource information indicating the type (H/S/NA) of a time resource and a frequency resource to be allocated to the first radio link with the upper node and the second radio link with the lower node.

The configuration information and the resource information may be transmitted from the CU 50 according to an F1-Application (AP) protocol applied to the F1 interface between the CU and the DU, or may be transmitted from the network (specifically, gNB) by radio resource control layer (RRC) signaling.

The radio receiving unit 162 can receive indication information indicating whether or not frequency bands used for simultaneous transmission and reception (frequency division duplex (FDD)) in the first radio link and the second radio link by the FDM overlap each other, or indicating a default operation in the simultaneous transmission and reception.

As described above, the radio communication node 100B enables simultaneous transmission and reception according to the FDM by the MT and the DU of the IAB node, that is, the FDD.

Note that the overlapping of frequency bands may include a case where the frequency bands to be allocated to the first radio link and the second radio link (which may be read as the MT serving cell and the DU serving cell) partially or entirely overlap each other. Further, the default operation in simultaneous transmission and reception may mean a default operation when the MT and the DU of the radio communication node 100B are operated according to the FDM (FDD).

Further, the radio transmitting unit 161 can transmit, to the network, capability information (UE capability) indicating whether or not simultaneous transmission and reception by the FDM (FDD) is possible. In the present embodiment, the radio transmitting unit 161 configures a transmitting unit.

The upper node connecting unit 170 provides an interface or the like that realizes connection to an upper node in relation to the IAB node. Note that the upper node means a radio communication node located more toward the network, specifically, the core network (which may also be referred to as being located on an upstream side or uplink side) than the IAB node is.

Specifically, the upper node connecting unit 170 provides the function of the MT. That is, the upper node connecting unit 170 is used for connection to the parent node that configures the upper node in the present embodiment.

The lower node connecting unit 180 provides an interface or the like that realizes connection to a lower node in relation to the IAB node. Note that the lower node means a radio communication node located more toward an end user (which may also be referred to as being located on a downstream side or downlink side) than the IAB node is.

Specifically, the lower node connecting unit 180 provides the function of the distributed unit (DU). That is, the lower node connecting unit 180 is used for connection to the child node (or the UE 200) that configures the lower node in the present embodiment.

The control unit 190 controls each functional block included in the radio communication node 100B. Particularly, in the present embodiment, the control unit 190 can establish the first radio link (Link_parent) with the upper node and the second radio link (Link_child) with the lower node based on the configuration information related to simultaneous transmission and reception by the FDM, the configuration information being received by the radio receiving unit 162.

Further, the control unit 190 can establish the radio link, specifically, the first radio link (Link_parent) and the second radio link (Link_child) based on the resource information received from the network (or the CU 50).

When the type of the time resource to be allocated to Link_child is not exclusive to Link_child, the control unit 190 can establish Link child using the time resource in a case where it is indicated that simultaneous transmission and reception in the MT and the DU by the FDM can be performed.

Further, when it is indicated that both the type (H/S/NA) of the time resource and the type (H/S/NA) of the frequency resource are available for Link_child, the control unit 190 can perform simultaneous transmission and reception by the FDM in Link_parent and Link_child by using the time resource and the frequency resource.

Specifically, the control unit 190 can determine, based on the type (H/S/NA) of the time resource and the type (H/S/NA) of the frequency resource that are indicated by the resource information, a resource (DU resource) to be allocated to a radio link with the lower node, specifically, the UE 200 or another radio communication node that configures the child node in relation to the IAB node.

Various channels may be transmitted and received via the radio link to which the DU resource is allocated.

The channels include a control channel and a data channel. Examples of the control channel include a physical downlink control channel (PDCCH), a physical uplink control channel (PUCCH), a physical random access channel (PRACH), and a physical broadcast channel (PBCH).

Examples of the data channel include a physical downlink shared channel (PDSCH) and a physical uplink shared channel (PUSCH).

Note that a reference signal means a demodulation reference signal (DMRS), a sounding reference signal (SRS), a phase tracking reference signal (PTRS), and a channel state information-reference signal (CSI-RS), and a signal means a channel and a reference signal. Data may mean data transmitted via the data channel.

Uplink Control Information (UCI) is UL control information, which is symmetrical with Downlink Control Information (DCI). The UCI is transmitted via the PUCCH or the PUSCH. The UCI can include a Scheduling Request (SR), a Hybrid Automatic repeat request (HARQ) ACK/NACK, and a Channel Quality Indicator (CQI).

The DCI is DL control information. The DCI is transmitted via the PDCCH. The DCI can include PDSCH and PUSCH schedule information.

### (3) Operation of Radio Communication System

Next, an operation of the radio communication system 10 will be described. Specifically, an operation of the IAB node (radio communication node 100B) that is related to simultaneous transmission and reception using the FDM between the radio link (parent link (Link_parent)) with the parent node (radio communication node 100A), and the radio link (child link (Link_child)) with the child node (the UE 200 or another radio communication node that configures the child node).

### (3.1) Prerequisite

In Release 17 of 3GPP, expansion of radio resource multiplexing is planned to support simultaneous transmission and reception in the parent link and the child link.

For example, expansion of simultaneous transmission and reception in the following combinations of transmission and reception directions is planned.

- MT transmission/DU transmission
- MT transmission/DU reception
- MT reception/DU transmission
- MT reception/DU reception

In addition, support of dual connectivity (DC) in which simultaneous communication between the UE and each of two NG-RAN nodes is performed, is also planned. Furthermore, in order to support the simultaneous transmission and reception, expansion related to a timing mode of the IAB node, a DL/UL power control, Cross Link Interference (CLI) in a radio backhaul (BH) link, and interference measurement can be considered.

In Release 16 of 3GPP, resource multiplexing by the TDM is specified between the parent link and the child link.

Specifically, the DU resource for the TDM can be configured semi-statically. In each serving cell formed by the DU of the IAB node, the DU of the IAB node can set the resource type such as hard, soft, or NA for symbols in each slot.

The configuration can be realized by using GNB-DU RESOURCE CONFIGURATION which is an F1-AP message transmitted from the CU 50.

In a case where the DU resource (symbol) is a soft DU resource, dynamic indication (IA or INA) can be made explicitly and implicitly.

Specifically, in a case where a DL, UL, or flexible symbol is configured as soft, the DU of the IAB node can perform transmission, reception, or transmission and reception on the symbol only in the following cases.

- The MT of the IAB node does not perform transmission or reception on the symbol (implicit indication)
- Since the MT of the IAB node performs transmission or reception on the symbol, transmission or reception on the symbol by the use of the symbol by the DU of the IAB node is not changed (implicit indication)
- The MT of the IAB node detects DCI format 2_5 (see Clause 7.3 of 3GPP TS 38.212) and indicates that the symbol is available by using a field value of an Availability Indicator (AI) index (explicit indication)

Further, for the DU resource in the frequency domain, the CU 50 can configure frequency information and a transmission bandwidth of a serving cell formed by the DU (hereinafter, referred to as a DU serving cell) through F1-AP signaling by using an information element (IE) of Served Cell Information. The Served Cell Information can include IEs of NR Frequency Info and Transmission Bandwidth.

Further, in Release 16 of 3GPP, a donor CU and the parent node can recognize a multiplexing capability (whether or not the TDM is required) for any pair of MT component carriers (CCs) or DU cells between the MT and the DU of the IAB node.

In addition, the multiplexing capability in a case of non-TDM between the MT and the DU of the IAB node is additionally indicated for the combination of transmission and reception directions (for each pair of MT CCs or DU cells) described above.

The following Assumptions 1 to 3 can be considered for simultaneous transmission and reception between the parent link and the child link by resource multiplexing between the parent link and the child link by the FDM.

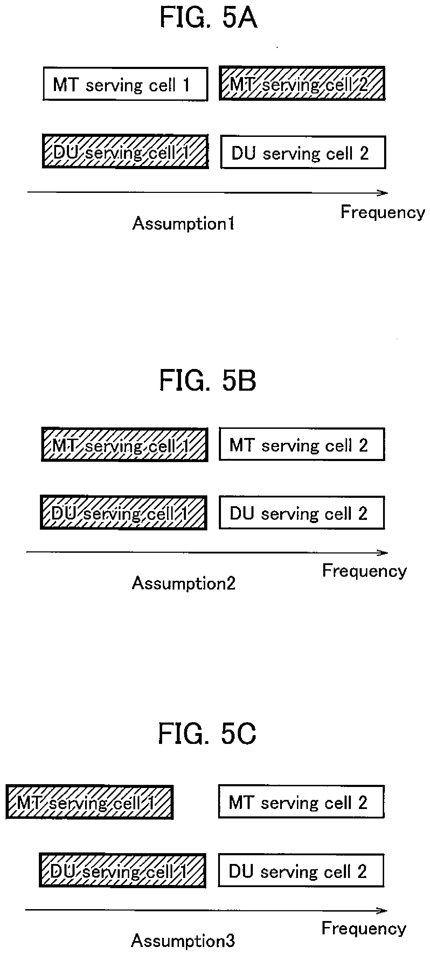

Figs. 5A to 5C illustrate usage examples of frequency resources of a DU serving cell and a MT serving cell based on Assumptions 1 to 3, respectively.

- (Assumption 1): The DU serving cell and the MT serving cell perform simultaneous transmission and reception (or simultaneous transmission or simultaneous reception) using resources that do not overlap each other in the frequency direction.

As illustrated in Fig. 5A, a DU transmission band does not overlap with a BWP (which may be configured by signaling in an RRC layer) of the MT serving cell.

Note that the DU serving cell and the MT serving cell may mean cells formed by the DU and the MT of the IAB node, respectively.

- (Assumption 2): The DU serving cell and the MT serving cell perform simultaneous transmission and reception using resources that completely overlap each other in the frequency direction.

- (Assumption 3): The DU serving cell and the MT serving cell perform simultaneous transmission and reception using resources that partially overlap each other in the frequency direction.

In a case of (Assumption 1), since the bandwidths of the DU serving cell and the MT serving cell are configured so as not to overlap each other, in a case where the multiplexing capability of the IAB node supports simultaneous transmission and reception in a pair of the DU serving cell and the MT serving cell, the MT and the DU of the IAB node can perform simultaneous transmission and reception as long as the transmission direction matches the multiplexing capability. In this case, no additional signaling for resource multiplexing in the frequency domain is required.

In a case of (Assumption 2) or (Assumption 3), even when the IAB node has an ability to support simultaneous transmission and reception in a pair of the DU serving cell and the MT serving cell, the MT and the DU of the IAB node can perform simultaneous transmission and reception only in a case where the parent node and the IAB node commonly recognize that orthogonal frequency resources are used by the MT and the DU.

Based on the above-described content defined in Release 16 of 3GPP, in the present embodiment, semi-static or dynamic resource multiplexing between the parent link and the child link by the FDM is realized.

### (3.2) Overview of Operation

In operation examples described below, simultaneous transmission and reception according to the FDM by the MT and the DU of the IAB node in the same frequency band (which may also be simply referred to as a band or a frequency range), that is, the FDD is possible.

Particularly, in both a case where the frequency bands used by the DU serving cell and the MT serving cell partially or entirely overlap each other (which may be referred to as in-band) (Assumptions 2 and 3 described above), and a case where the frequency bands used by the DU serving cell and the MT serving cell do not overlap each other (which may be referred to as out-band) (Assumption 1 described above), simultaneous transmission and reception according to the FDM by the MT and the DU is realized.

The operation examples described below includes Operation Examples 1 to 5.

- (Operation Example 1): Operation example related to Assumption 1
- (Operation Example 1-1): The CU 50 or another node configuring the network indicates, to the IAB node, whether or not an operation of the MT and the DU other than the TDD of the IAB node is possible.
- (Operation Example 1-2): The MT and the DU of the IAB node perform simultaneous transmission and reception.

In a case where the DU resource is NA, one of the following options may be applied.

- (Option 1): The DU cannot be operated.
- (Option 2): In a case where capability information indicating that an operation of the MT and the DU other than the TDD is possible is reported, the DU can be operated.

In a case where the DU resource is soft, when the IAB node reports capability information indicating that an operation of the MT and the DU other than the TDD is possible, or when the IAB node receives an indication indicating that an operation other than the TDD is possible, the IAB node may perform simultaneous transmission and reception by the MT and the DU.

- (Operation Example 2): Operation example related to Assumption 2

The configurations of the time resource and the frequency resource are performed individually, and the operation (simultaneous transmission and reception) of the DU is performed only when both resources are indicated as available.

For the time resource, the mechanism of Release 16 (hereinafter, Rel-16) of 3GPP may be reused and Operation Example 1 may be applied.

For the frequency resource, the availability (H/S/NA) of the DU resource is set semi-statically or dynamically.

For example, the IAB node may be operated as follows.

- The DU is operated by using a frequency band configured as hard/IA for the time resource configured as hard.
- The DU may be operated based on any of the following for the time resource configured as NA.
- (Alt. 1): The corresponding DU resource is not used (the DU is not operated).
- (Alt. 2): When the IAB node reports capability information indicating that an operation of the MT and the DU other than the TDD is possible, or when the IAB node receives an indication indicating that an operation other than the TDD is possible, the IAB node may be operated by using the frequency band configured as hard/IA.
- When the DU reports capability information indicating that an operation of the MT and the DU other than the TDD is possible for the time resource configured as soft, the DU is operated by using the frequency band configured as hard/IA.
- (Modified example of Operation Example 2): Example of operation of configuration of frequency resource for type (H/S/NA) of time resource

The configuration of the frequency resource for the type (H/S/NA) of the time resource may be operated based on any of the following.

- (Alt. 1): The type (H/S/NA) of the frequency resource is set regardless of a time resource configuration status (H/S/NA).
- (Alt. 2): The type (H/S/NA) of the frequency resource is set according to the time resource configuration status (H/S/NA) (for example, only in a case of hard).
- (Operation Example 3): Operation example related to Assumption 3

The DU may be operated according to an indication from the network (or the CU 50) set for the matrix (combination) in the time direction and the frequency direction.

The operation for the setting of the resource type (H/S/NA) may be in accordance with Rel-16.

- (Operation Example 4): Operation example related to capability of IAB node

Any of the following options may be applied to an operation related to the capability of the IAB node.

- (Option 1): The IAB node reports whether or not the out-band FDM and the in-band FDM can be supported, as to whether or not the FDM operation of the MT and the DU is possible.
- (Option 2): The IAB node sets any of the out-band FDM or the in-band FDM as default, and reports whether or not the FDM can be supported.
- (Operation Example 5): Operation example related to FDM configuration

Any of the following options may be applied to an operation related to FDM configuration.

- (Option 1): The CU 50 (network) configures the FDM operation (out-band FDM or in-band FDM).
- (Option 2): The CU 50 (network) configures the FDM operation when the IAB node supports the default operation (out-band FDM or in-band FDM) of the FDM.

### (3.3) Operation Examples

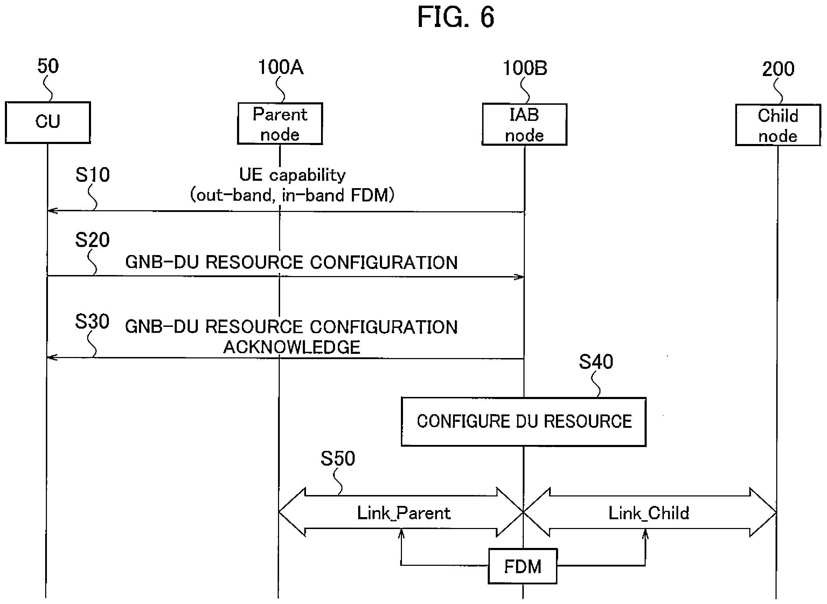

First, an overall sequence related to the configuration of the DU resource of the IAB node will be described. Fig. 6 illustrates a schematic communication sequence related to DU resource configuration of an IAB node.

As illustrated in Fig. 6, the radio communication node 100B (IAB node) transmits, to the CU 50 (or another node configuring the network), capability information (UE capability) related to the FDM operation of the MT and the DU (S10).

Specifically, the radio communication node 100B can transmit, to the CU 50, capability information indicating that an operation of the MT and the DU other than the TDD is possible. More specifically, the radio communication node 100B can transmit, to the CU 50, capability information indicating whether or not the radio communication node 100B supports simultaneous transmission and reception by the out-band FDM and/or the in-band FDM. Note that, as described above, any of the out-band FDM or the in-band FDM may be set as default.

The CU 50 transmits, to the radio communication node 100B (IAB node), GNB-DU RESOURCE CONFIGURATION including the type of the DU resource of the IAB node based on the received capability information of the IAB node (S20).

The GNB-DU RESOURCE CONFIGURATION is a type of F1-AP message and is defined in 3GPP TS 38.473.

In response to the reception of the GNB-DU RESOURCE CONFIGURATION, the radio communication node 100B, specifically, the DU of the IAB node returns GNB-DU RESOURCE CONFIGURATION ACKNOWLEDGE to the CU 50 (S30). Note that the GNB-DU RESOURCE CONFIGURATION and the GNB-DU RESOURCE CONFIGURATION ACKNOWLEDGE are kinds of F1-AP messages and are defined in 3GPP TS 38.473.

The radio communication node 100B configures the DU resource based on the type (H/S/NA) of the DU resource included in the GNB-DU RESOURCE CONFIGURATION (S40).

Specifically, the radio communication node 100B determines the time resource and frequency resource to be allocated to the child link (Link_child) based on the type (H/S/NA) of the DU resource. Note that the child link may be referred to as a DU serving cell as described above.

The radio communication node 100A (parent node) and the radio communication node 100B establish a parent link (Link_parent) and a child link (Link_child) (S50). As described above, in this operation example, transmission/reception according to the FDM, that is, the FDD is performed between the parent link and the child link.

### (3.3.1) Operation Example 1

In Rel-16, the IAB node can provide, to the CU 50 or the parent node, a multiplexing capability for a combination of transmission directions of the MT and the DU for each {MT CC/DU cell} pair. However, the operation of the IAB node is left to the implementation.

In Operation Example 1-1, the CU 50 may notify the IAB node of whether or not multiplexing between the MT and the DU related to a combination of transmission directions of the MT and the DU is supported for each {MT CC/DU cell} pair by RRC signaling and/or F1-AP signaling.

In Operation Example 1-2, the DU of the IAB node may be operated as follows. Specifically, in a case of the DU serving cell, the DU may perform transmission and reception, transmission, or reception on the symbol when the D/U/F symbol is configured as hard. This is the operation according to Rel-16.

On the other hand, when the D/U/F symbol is configured as NA, the DU may apply Option 1 or Option 2.

Specifically, in a case of Option 1, the DU does not perform both transmission and reception on the symbol. This is also the operation according to Rel-16.

In a case of Option 2, the DU can perform transmission and reception, transmission, or reception on the symbol in a case where it is reported that the IAB node supports a multiplexing capability for a combination of the transmission directions of the MT and the DU for a pair of the MT serving cell and the DU serving cell, and/or a case where the CU 50 sets a multiplexing capability for a combination of the transmission directions of the MT and the DU in the IAB node for a pair of the MT serving cell and the DU serving cell.

Further, the DU may perform transmission and reception, transmission, or reception on the symbol only in the following case when the DU resource, specifically, the D/U/F symbol is configured as soft.

- The MT of the IAB node performs transmission or reception on the symbol. The IAB node may report to the CU 50 that the IAB node supports a multiplexing capability for a combination of transmission directions of the MT and the DU for a pair of the MT serving cell and the DU serving cell (which may be simply referred to as a DU cell).

As described above, the CU 50 may set a multiplexing capability for a combination of transmission directions of the MT and the DU in the IAB node (implicit indication).

- The MT of the IAB node does not perform both transmission and reception on the symbol (which is an operation according to Rel-16 and implicit indication).
- The MT of the IAB node may detect DCI format 2_5 (Clause 7.3 of 3GPP TS 38.212) that has a field value of an Availability Indicator (AI) index indicating that the symbol (soft) is available (which is an operation according to Rel-16 and implicit indication).

Note that, in Assumption 1, in a case where the DU of the IAB node can perform transmission or reception on a symbol configured as hard, soft, or NA, the DU of the IAB node performs transmission and/or reception using any frequency resource of the DU serving cell.

### (3.3.2) Operation Example 2

In a case of the DU serving cell, the DU of the IAB node can perform transmission and/or reception by using the time-frequency (T-F) resources (T-F resources) only in a case where the time resource is configured and/or indicated as available and the frequency resource is configured and/or indicated as available.

For the time resource, signaling for configuration and/or indication of the DU resource according to Rel-16 may be reused. Further, the above-described Operation Example 1 may be reused to determine whether or not the DU symbol is available.

For the frequency resource, whether or not the DU resource is available in a unit of a resource block (RB), a resource block group (RBG), a subcarrier, or the like in the frequency direction may be indicated by H/S/NA, similarly to the time resource.

Table 1 shows an operation of the DU of the IAB node for each combination of the type (H/S/NA) of the time resource and the type (H/S/NA) of the frequency resource.

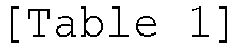

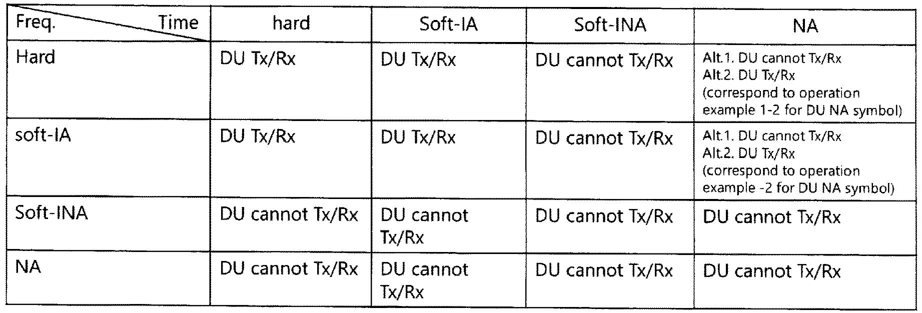

Note that soft-IA may be interpreted as a soft resource explicitly designated as available by the DCI or a soft resource implicitly determined as available.

Soft-INA may be interpreted as a soft resource explicitly designated as available by the DCI or a soft resource implicitly determined as not available.

Further, the IAB node may also be operated as follows. For example, in a case of the DU serving cell, when the DU symbol is configured as hard, the IAB node can perform transmission and/or reception on a symbol corresponding to the frequency resource that is also configured as hard.

Alternatively, when the DU symbol is configured as soft, the IAB node can perform transmission and/or reception on a symbol corresponding to the frequency resource that is explicitly designated as available by the DCI or that is implicitly determined as available and configured as soft.

Further, when the DU symbol is configured as NA (corresponding to a case where the DU symbol is configured as NA in Operation Example 1-2), the IAB node may be operated according to any of the following.

- (Alt. 1): The DU does not perform both transmission and reception on the symbol.
- (Alt. 2): The DU may perform transmission and reception, transmission, or reception on a symbol corresponding to a frequency resource configured as hard, or a symbol corresponding to a frequency resource configured as soft, in a case where it is reported that the IAB node supports a multiplexing capability for a combination of the transmission directions of the MT and the DU for a pair of the MT serving cell and the DU serving cell, and/or a case where the CU 50 sets a multiplexing capability for a combination of the transmission directions of the MT and the DU in the IAB node for a pair of the MT serving cell and the DU serving cell.

Further, when the DU symbol is configured as soft, the DU of the IAB node may perform transmission and reception, transmission, or reception on a symbol corresponding to a frequency resource configured as hard, or may perform transmission and reception, transmission, or reception on a symbol corresponding to a frequency resource that is explicitly designated as available by the DCI, or that is implicitly determined as available and configured as soft (corresponding to a case where the DU symbol is configured as NA in Operation Example 1-2).

The MT of the IAB node can perform transmission or reception on the symbol. Further, the IAB node may report, to the network (or the CU 50), that the IAB node supports a multiplexing capability for a combination of the transmission directions of the MT and the DU for a pair of the MT serving cell and the DU serving cell, and/or that the CU 50 sets a multiplexing capability for a combination of the transmission directions of the MT and the DU in the IAB node for a pair of the MT serving cell and the DU serving cell (implicit indication).

In this case, the MT of the IAB node does not have to perform transmission and reception on the symbol (implicit indication). Further, the MT of the IAB node may detect DCI format 2_5 that has a field value of an AI index indicating that the symbol is available (which is an operation according to Rel-16 and implicit indication).

Note that, as described above, the frequency resource may be designated in a unit of RB or RBG.

Next, a modified example of Operation Example 2 will be described. Specifically, an operation related to the setting and indication of the type (H/S/NA) of the DU frequency resource combined with the DU symbol (time resource) configured as any of H/S/NA will be described.

As described above, the configuration of the frequency resource for the type (H/S/NA) of the time resource may be operated based on any of Alt. 1 or Alt. 2.

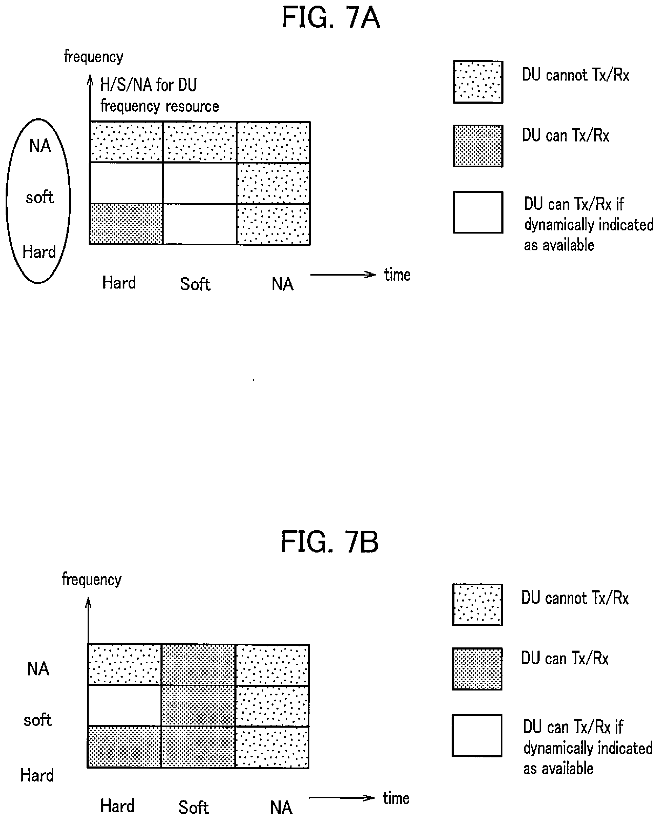

Fig. 7A illustrates an indication example of DU resources according to a modified example (Alt. 1) of Operation Example 2. Fig. 7B illustrates an indication example of DU resources according to a modified example (Alt. 2) of Operation Example 2.

In Alt. 1, as illustrated in Fig. 7A, the type (H/S/NA) of the frequency resource may be designated similarly to the time resource (symbol). As described above, the type (H/S/NA) of the frequency resource may be set regardless of the time resource configuration status (H/S/NA).

As illustrated on the right side in Fig.7A, the availability of a combination (matrix) position of the time resource (for example, symbols) and the frequency resource (for example, RB) is determined by the configuration (H/S/NA) of the time resource and the configuration (H/S/NA) of the frequency resource.

In Alt. 2, for example, the DU frequency resource configuration (H/S/NA) may be applied to only a hard symbol, only a soft symbol, or any combination of H/S/NA symbols.

Fig. 7B illustrates an example in which the DU frequency resource configuration (H/S/NA) is applied only to the hard symbol. That is, the DU frequency resource configuration (H/S/NA) is not applied to the soft symbol and the NA symbol. Therefore, the type of the DU frequency resource corresponding to the soft symbol may be predefined as hard, and the type of the DU frequency resource corresponding to the NA symbol may be predefined as NA.

As such, for symbols that are not applied with the DU frequency resource configuration, a default resource type may be predefined in the 3GPP specification. The default resource type may be applied to all frequency resources within a symbol (which may also be expressed as corresponding to a symbol).

Further, as illustrated in Fig. 7B, in a case where the CU 50 or the like dynamically indicates that the resource is available, a combination (matrix) position on which transmission and/or reception can be performed by the DU may exist.

In a case where the symbol types (H/S/NA) are different, a type that is the same as or different from the resource type of the frequency resource may be predefined.

For example, the DU frequency resource configuration (H/S/NA) may be applied only to the hard symbol. The default resource type may be applied to the soft symbol and NA symbol. As a specific example, the frequency resource may be predefined as hard for the soft symbol.

In other words, when the symbol is configured as soft and it is determined that the symbol is available according to Rel-16, the IAB node may perform transmission and/or reception on the symbol for any frequency resource (the symbol corresponding to the frequency resource). For the soft symbol and the NA symbol, the same or different types of default resource types may be predefined.

As described above, in the present modified example, even when the type of the frequency resource is set, for example, in a case where the type of the frequency resource cannot be applied to the soft symbol, the resource type may be applied to the soft symbol.

### (3.3.3) Operation Example 3

As described above, this operation example is related to Assumption 3 (the DU serving cell and the MT serving cell perform simultaneous transmission and reception using resources that partially overlap each other in the frequency direction).

In this case, in a case of the DU serving cell, the DU of the IAB node can perform transmission and/or reception on the T-F resources when the T-F resources are configured and/or indicated as available.

Specifically, the DU of the IAB node may be operated as follows in a case of the DU serving cell.

- When the T-F resources are configured as hard, transmission and/or reception may be performed on the T-F resources. Note that "on the T-F resources" may mean that a radio link (child link) using the T-F resources is established and data transmission and/or reception is performed.
- When the T-F resources are configured as NA, both transmission and reception do not have to be performed on the T-F resources.
- When the T-F resources are configured as soft, transmission and/or reception may be performed on the T-F resources in a case where the T-F resources are explicitly designated as available by the DCI or implicitly determined as available.

### (3.3.4) Operation Example 4

As described above, the IAB node can report, to the network (or the CU 50), capability information (capability) related to simultaneous transmission and reception using the FDM in the parent link and the child link.

In Option 1, the IAB node can report a multiplexing capability indicating whether or not the FDM (out-band FDM) of Assumption 1 or the FDM (in-band FDM) of Assumption 2 is supported.

In a case where the out-band FDM is supported, Operation Example 1 described above may be applied. In a case where the in-band FDM is supported, Operation Example 2 or Operation Example 3 described above may be applied.

In addition, in Option 2, the IAB node can report a multiplexing capability indicating whether or not simultaneous transmission and reception using the FDM is supported. In this case, the following options may be further set.

- (Option 2-1): When the out-band FDM is supported, Operation Example 1 described above is applied.
- (Option 2-2): When the in-band FDM is supported, Operation Example 2 or Operation Example 3 described above is applied.

### (3.3.5) Operation Example 5

As described above, the CU 50 can set an operation related to simultaneous transmission and reception using the FDM for the IAB node.

In Option 1, the CU 50 (network) can set whether or not to support the FDM (out-band FDM) of Assumption 1 or the FDM (in-band FDM) of Assumption 2 for the IAB node.

In a case where the out-band FDM is supported, Operation Example 1 described above may be applied. In a case where the in-band FDM is supported, Operation Example 2 or Operation Example 3 described above may be applied.

In Option 2, the CU 50 (network) can set whether or not to support simultaneous transmission and reception using the FDM for the IAB node. In a case where simultaneous transmission and reception using the FDM is supported, the following options may be set as a default operation.

- (Option 2-1): The out-band FDM is supported, and Operation Example 1 described above is applied.
- (Option 2-2): The in-band FDM is supported, and Operation Example 2 or Operation Example 3 described above is applied.

### (4) Actions/Effects

According to the above-described embodiment, the following actions and effects can be obtained. Specifically, the radio communication node 100B (IAB node) can receive, from the network, configuration information indicating whether or not simultaneous transmission and reception by the FDM in a radio link (first radio link (Link_parent)) with the upper node and a radio link (second radio link (Link_child)) with the lower node is possible. Further, the radio communication node 100B can establish the first radio link and the second radio link based on the configuration information.

Therefore, even in a case where the IAB node performs simultaneous transmission and reception in the MT and the DU resource using the FDM, the IAB node can easily determine whether or not simultaneous transmission and reception with the MT using the FDM can be performed. As a result, the IAB node can perform appropriate simultaneous transmission and reception using the FDM in the MT and the DU.

In the present embodiment, when the type of the time resource to be allocated to Link_child is not exclusive to Link_child, the radio communication node 100B can establish Link_child using the time resource in a case where it is indicated that simultaneous transmission and reception in the MT and the DU by the FDM can be performed. As a result, contention of resources by the MT and the DU can be reliably prevented, and simultaneous transmission and reception in the MT and the DU by the FDM can be performed more reliably.

In the present embodiment, the radio communication node 100B can receive, from the network, resource information indicating the types (H/S/NA) of a time resource and a frequency resource to be allocated to the first radio link with the upper node and the second radio link with the lower node. Further, when it is indicated that both the type (H/S/NA) of the time resource and the type (H/S/NA) of the frequency resource are available for Link_child, the radio communication node 100B can perform simultaneous transmission and reception by the FDM in Link_parent and Link_child by using the time resource and the frequency resource.

Therefore, even in a case where the IAB node performs simultaneous transmission and reception in the MT and the DU using the FDM, the IAB node can easily determine whether or not the DU resource, specifically, the time resource and the frequency resource can be applied to simultaneous transmission and reception with the MT using the FDM. As a result, the IAB node can perform appropriate simultaneous transmission and reception using the FDM in the MT and the DU.

In the present embodiment, the radio communication node 100B can transmit, to the network, capability information (UE capability) indicating whether or not simultaneous transmission and reception by the FDM (FDD) is possible. Therefore, the network can configure simultaneous transmission and reception by FDM (FDD) suitable for the capability of the radio communication node 100B (IAB node).

In the present embodiment, the radio communication node 100B can receive indication information indicating whether or not frequency bands used for simultaneous transmission and reception (frequency division duplex (FDD)) in the first radio link and the second radio link by the FDM overlap each other, or indicating a default operation in the simultaneous transmission and reception. Therefore, the IAB node can perform simultaneous transmission and reception by FDM (FDD) suitable for a situation of the radio communication system 10.

### (5) Other Embodiments

Although the embodiment has been described above, the present disclosure is not limited to the description of the embodiment, and it is obvious to those skilled in the art that various modifications and improvements can be made.

For example, in the above-described embodiment, although the terms such as the parent node, the IAB node, and the child node have been used, different terms may be used instead thereof in a case where the configuration of the radio communication node in which the radio backhaul between the radio communication nodes such as the gNB, and the radio access with the terminal are integrated is adopted. For example, the radio communication node may be simply referred to as a first node, a second node, or the like, or may be referred to as an upper node, a lower node, a relay node, an intermediate node, or the like.

The radio communication node may be simply referred to as a communication device or a communication node, or may be read as a radio base station.

In the above-described embodiment, the terms "downlink (DL)" and "uplink (UL)" have been used, but they may be called in other terms. For example, the terms may be replaced or associated with terms such as forward ring, reverse link, access link, and backhaul. Alternatively, terms such as a first link, a second link, a first direction, a second direction, and the like may be used.

Moreover, the block diagrams (Figs. 3 and 4) used for describing the embodiments illustrate blocks of functional unit. Those functional blocks (structural components) are realized by a desired combination of at least one of hardware and software. A method for realizing each functional block is not particularly limited. That is, each functional block may be realized by one device combined physically or logically. Alternatively, two or more devices separated physically or logically may be directly or indirectly (for example, wired or wirelessly) connected to each other, and each functional block may be realized by these plural devices. The functional blocks may be realized by combining software with the one device or the plural devices described above.

Functions include determining, judging, calculating, computing, processing, deriving, investigating, searching, ascertaining, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (structural component) that causes transmitting is called a transmitting unit or a transmitter. For any of the above, as described above, the realization method is not particularly limited to any one method.

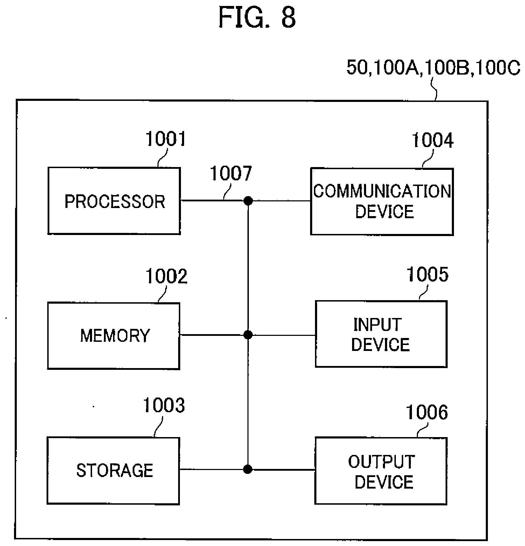

Furthermore, the CU 50, the radio communication nodes 100A to 100C, and the UE 200 (the device) described above may function as a computer that performs the processing of the radio communication method of the present disclosure. Fig. 8 is a diagram illustrating an example of a hardware configuration of the device. As illustrated in Fig. 8, the device may be configured as a computer device including a processor 1001, a memory 1002, a storage 1003, a communication device 1004, an input device 1005, an output device 1006, a bus 1007, and the like.

Furthermore, in the following description, the term "device" can be replaced with a term such as "circuit", "device", or "unit". A hardware configuration of the device may be constituted by including one or plurality of the devices illustrated in the figure, or may be constituted without including some of the devices.

Each functional block (Figs. 3 and 4) of the device is realized by any of hardware elements of the computer device or a desired combination of the hardware elements.

Moreover, the processor 1001 performs operation by loading predetermined software (program) on hardware such as the processor 1001 and the memory 1002, controls communication via the communication device 1004, and controls reading and/or writing of data on the memory 1002 and the storage 1003, thereby realizing various functions of the device.

The processor 1001, for example, operates an operating system to control the entire computer. The processor 1001 may be configured with a central processing unit (CPU) including an interface with a peripheral device, a control device, an operation device, a register, and the like.

Moreover, the processor 1001 reads a program (program code), a software module, data, and the like from the storage 1003 and/or the communication device 1004 into the memory 1002, and performs various types of processing according to the data. As the program, a program that is capable of executing on the computer at least a part of the operation described in the above embodiments is used. Alternatively, various processing described above can be performed by one processor 1001 or may be performed simultaneously or sequentially by two or more processors 1001. The processor 1001 may be implemented by using one or more chips. Alternatively, the program may be transmitted from a network via a telecommunication line.

The memory 1002 is a computer readable recording medium and may be configured, for example, with at least one of Read Only Memory (ROM), Erasable Programmable ROM (EPROM), Electrically Erasable Programmable ROM (EEPROM), Random Access Memory (RAM), and the like. The memory 1002 may be called register, cache, main memory (main storage device), and the like. The memory 1002 can store therein a program (program codes), software modules, and the like that can execute the method according to the embodiment of the present disclosure.

The storage 1003 is a computer readable recording medium. Examples of the storage 1003 include at least one of an optical disk such as Compact Disc ROM (CD-ROM), a hard disk drive, a flexible disk, a magneto-optical disk (for example, a compact disk, a digital versatile disk, or a Blu-ray (Registered Trademark) disk), a smart card, a flash memory (for example, a card, a stick, or a key drive), a floppy (Registered Trademark) disk, a magnetic strip, and the like. The storage 1003 may be called an auxiliary storage device. The recording medium may be, for example, a database including at least one of the memory 1002 and the storage 1003, a server, or other appropriate media.

The communication device 1004 is hardware (transmission/reception device) capable of performing communication between computers via at least one of a wired network and radio network. The communication device 1004 is also called, for example, a network device, a network controller, a network card, a communication module, or the like.

The communication device 1004 may include a radio-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that the input device 1005 and the output device 1006 may be integrated (for example, a touch screen).

In addition, the respective devices, such as the processor 1001 and the memory 1002, are connected to each other with the bus 1007 for communicating information thereamong. The bus 1007 may be constituted by a single bus or may be constituted by separate buses between the devices.

Further, the device may be configured to include hardware such as a microprocessor, a Digital Signal Processor (DSP), an Application Specific Integrated Circuit (ASIC), a Programmable Logic Device (PLD), and a Field Programmable Gate Array (FPGA). Some or all of these functional blocks may be realized by the hardware. For example, the processor 1001 may be implemented by using at least one of these types of hardware.

Notification of information is not limited to that described in the above aspect/embodiment, and may be performed by using a different method. For example, the notification of information may be performed by physical layer signaling (for example, Downlink Control Information (DCI), Uplink Control Information (UCI), higher layer signaling (for example, RRC signaling, Medium Access Control (MAC) signaling, broadcast information (Master Information Block (MIB) and System Information Block (SIB)), other signals, or a combination thereof. The RRC signaling may be called RRC message, and may be, for example, an RRC Connection Setup message or an RRC Connection Reconfiguration message.

Each of the above aspects/embodiments may be applied to at least one of Long Term Evolution (LTE), LTE-Advanced (LTE-A), SUPER 3G, IMT-Advanced, 4th generation mobile communication system (4G), 5^{th} generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the aspects/embodiments described in the present disclosure may be exchanged. For example, the various steps and the sequence of the steps of the methods described in the present disclosure are exemplary and are not limited to the specific order described above.

The specific operation that is performed by the base station in the present disclosure may be performed by its upper node in some cases. In a network constituted by one or more network nodes having a base station, the various operations performed for communication with the terminal can be performed by at least one of the base station and other network nodes other than the base station (for example, MME, S-GW, and the like may be considered, but not limited thereto). In the above, an example in which there is one network node other than the base station is described; however, a combination of a plurality of other network nodes (for example, MME and S-GW) may be used.

Information and signals (information and the like) can be output from a higher layer (or lower layer) to a lower layer (or higher layer). It may be input and output via a plurality of network nodes.

The input/output information may be stored in a specific location (for example, a memory) or may be managed in a management table. The information to be input/output can be overwritten, updated, or added. The information may be deleted after outputting. The inputted information may be transmitted to another device.

The determination may be made by a value (0 or 1) represented by one bit or by a Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, and it may be performed implicitly (for example, without notifying the predetermined information).

Instead of being referred to as software, firmware, middleware, microcode, hardware description language, or some other names, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when software is transmitted from a website, a server, or some other remote sources by using at least one of a wired technology (coaxial cable, optical fiber cable, twisted pair, Digital Subscriber Line (DSL), or the like) and a radio technology (infrared light, microwave, or the like), at least one of these wired and radio technologies is included within the definition of the transmission medium.

Information, signals, or the like described in the present disclosure may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in the present disclosure and terms necessary for understanding the present disclosure may be replaced by terms having the same or similar meanings. For example, at least one of a channel and a symbol may be a signal (signaling). Also, a signal may be a message. Further, a component carrier (CC) may be referred to as a carrier frequency, a cell, a frequency carrier, or the like.

The terms "system" and "network" used in the present disclosure are used interchangeably.

Furthermore, the information, the parameter, and the like described in the present disclosure may be represented by an absolute value, may be expressed as a relative value from a predetermined value, or may be represented by corresponding other information. For example, the radio resource may be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information elements can be identified by any suitable name, the various names assigned to these various channels and information elements shall not be restricted in any way.

In the present disclosure, it is assumed that "base station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, a communication service can be provided by a base station subsystem (for example, a small base station for indoor use (Remote Radio Head: RRH)).

The term "cell" or "sector" refers to a part or all of the coverage area of a base station and/or a base station subsystem that performs the communication service in this coverage.

In the present disclosure, the terms "mobile station (MS)", "user terminal", "user equipment (UE)", "terminal" and the like can be used interchangeably.

The mobile station may be called by those skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable terms.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), or a robot (manned type or unmanned type). At least one of a base station and a mobile station can be a device that does not necessarily move during the communication operation. For example, at least one of a base station and a mobile station may be an internet of things (IoT) device such as a sensor.

Also, a base station in the present disclosure may be read as a mobile station (user terminal, hereinafter, the same applies). For example, each of the aspects/embodiments of the present disclosure may be applied to a configuration that allows communication between a base station and a mobile station to be replaced with communication between a plurality of mobile stations (which may be referred to as, for example, Device-to-Device (D2D) or Vehicle-to-Everything (V2X)). In this case, the mobile station may have the function of the base station. Words such as "uplink" and "downlink" may also be replaced with wording corresponding to inter-terminal communication (for example, "side"). For example, terms such as an uplink channel, a downlink channel, or the like may be read as a side channel.

Likewise, a mobile station in the present disclosure may be read as a base station. In this case, the base station may have the function of the mobile station.

A radio frame may be configured with one or more frames in time domain. Each of one or more frames in the time domain may also be referred to as a subframe. The subframe may be configured with one or more slots in the time domain. The subframe may be a fixed time length (for example, 1 ms) that does not depend on numerology.

The numerology may be a communication parameter applied to at least one of transmission or reception of a certain signal or channel. The numerology may represent, for example, at least one of a subcarrier spacing (SCS), a bandwidth, a symbol length, a cyclic prefix length, a Transmission Time Interval (TTI), the number of symbols per TTI, a radio frame configuration, specific filtering processing performed by a transceiver in frequency domain, or specific windowing processing performed by the transceiver in the time domain.

The slot may be configured with one or more symbols (Orthogonal Frequency Division Multiplexing (OFDM) symbols, Single Carrier Frequency Division Multiple Access (SC-FDMA) symbols, and the like) in the time domain. The slot may be a unit of time based on the numerology.

The slot may include a plurality of minislots. Each minislot may be configured with one or more symbols in the time domain. Further, the minislot may also be called a subslot. The minislot may be configured with fewer symbols than those of slots. A PDSCH (or PUSCH) transmitted in a time unit larger than the minislot may be called a PDSCH (or PUSCH) mapping type A. A PDSCH (or PUSCH) transmitted using the minislot may be called a PDSCH (or PUSCH) mapping type B.

Each of the radio frame, subframe, slot, minislot, and symbol represents a time unit for transmitting a signal. Different names may be used for the radio frame, subframe, slot, minislot, and symbol, respectively.

For example, one subframe may be called a transmission time interval (TTI), a plurality of consecutive subframes may be called a TTI, and one slot or one minislot may be called a TTI. That is, at least one of the subframe or the TTI may be a subframe (1 ms) in the existing LTE, a period shorter than 1 ms (for example, 1 to 13 symbols), or a period longer than 1 ms. Note that a unit representing the TTI may also be called a slot, a minislot, or the like, instead of a subframe.

Here, the TTI refers to a minimum time unit of scheduling in radio communication, for example. For example, in the LTE system, a base station performs scheduling to allocate radio resources (frequency bandwidth, transmission power, or the like that can be used in each user terminal) to each user terminal in units of TTI. Note that the definition of the TTI is not limited thereto.

The TTI may be a transmission time unit such as a channel-coded data packet (transport block), a code block, or a codeword, or may be a processing unit such as scheduling or link adaptation. Note that, when a TTI is given, a time interval (for example, the number of symbols) in which a transport block, a code block, a codeword, or the like is actually mapped may be shorter than the TTI.

Note that, in a case where one slot or one minislot is called a TTI, one or more TTIs (that is, one or more slots or one or more minislots) may be a minimum time unit of scheduling. Further, the number of slots (the number of minislots) constituting the minimum time unit of the scheduling may be controlled.

A TTI having a time length of 1 ms may be called a normal TTI (TTI in LTE Rel. 8 to 12), a normal TTI, a long TTI, a normal subframe, a normal subframe, a long subframe, a slot, or the like. A TTI shorter than the ordinary TTI may be called a shortened TTI, a short TTI, a partial or fractional TTI, a shortened subframe, a short subframe, a minislot, a subslot, a slot, or the like.

Note that the long TTI (for example, the ordinary TTI or the subframe) may be read as a TTI having a time length exceeding 1 ms, and the short TTI (for example, the shortened TTI) may be read as a TTI having a TTI length of less than the TTI length of the long TTI and equal to or more than 1 ms.

The resource block (RB) is a resource allocation unit in the time domain and the frequency domain, and may include one or a plurality of consecutive subcarriers in the frequency domain. The number of subcarriers included in the RB may be the same regardless of the numerology, for example, twelve. The number of subcarriers included in the RB may be determined based on the numerology.

Further, the time domain of the RB may include one or a plurality of symbols, and may have a length of one slot, one minislot, one subframe, or one TTI. One TTI, one subframe, or the like may be configured with one or a plurality of resource blocks.

Note that one or a plurality of RBs may also be called physical resource blocks (PRB), subcarrier groups (SCG), resource element groups (REG), PRB pairs, RB pairs, or the like.

Further, the resource block may also be configured with one or a plurality of resource elements (RE). For example, one RE may be a radio resource region of one subcarrier and one symbol.

The bandwidth part (BWP) (which may also be called a partial bandwidth, or the like) may represent a certain subset of continuous common resource blocks (RBs) for the numerology in a certain carrier. Here, the common RB may be specified by an RB index based on a common reference point of the carrier. The PRB may be defined in a certain BWP and numbered within the BWP.

The BWP may include a BWP (UL BWP) for UL and a BWP (DL BWP) for DL. One or a plurality of BWPs may be configured in one carrier for a UE.

At least one of the configured BWPs may be active, and the UE does not have to expect to transmit and receive a predetermined signal/channel outside the active BWP. Note that "cell", "carrier", and the like in the present disclosure may be read as "BWP".

The above-described structures such as a radio frame, a subframe, a slot, a minislot, and a symbol are merely examples. For example, the configuration such as the number of subframes included in a radio frame, the number of slots per subframe or radio frame, the number of minislots included in a slot, the number of symbols and RBs included in a slot or minislot, the number of subcarriers included in an RB, the number of symbols in a TTI, a symbol length, and a cyclic prefix (CP) length can be variously changed.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using at least one of one or more wires, cables, and printed electrical connections, and as some non-limiting and non-exhaustive examples, by using electromagnetic energy having wavelengths in the radio frequency domain, the microwave region, and the light (both visible and invisible) region, and the like.

The reference signal may be abbreviated as RS and may be called pilot according to applicable standards.

As used in the present disclosure, the phrase "based on" does not mean "based only on" unless explicitly stated otherwise. In other words, the phrase "based on" means both "based only on" and "based at least on".

A term "means" in the configuration of each device described above may be replaced with a term such as "unit", "circuit", or "device".

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in any other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout the present disclosure, for example, during translation, if articles such as "a", "an", and "the" in English are added, in the present disclosure, these articles may include a plurality of nouns following these articles.

The term "determining" used in the present disclosure may encompass a wide variety of operations. The term "determining" can include, for example, judging, calculating, computing, processing, deriving, investigating, looking up, search, inquiry (for example, searching in a table, database, or other data structure), and ascertaining. In addition, "determining" can include receiving (for example, receiving information), transmitting (for example, transmitting information), inputting, outputting, and accessing (for example, accessing data in a memory), and the like. In addition, "determining" can include "resolving", "selecting", "choosing", "establishing", "comparing", and the like. In other words, the term "determining" can include any operation. Further, the term "determining" may also be read as "assuming", "expecting", "considering", and the like.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### Reference Signs List

- 10: Radio communication system
- 50: CU
- 100A, 100B, 100C: Radio communication node
- 110: Radio transmitting unit
- 120: Radio receiving unit
- 130: NW IF unit
- 140: IAB node connecting unit
- 150: Control unit
- 161: Radio transmitting unit
- 162: Radio receiving unit
- 170: Upper node connecting unit
- 180: Lower node connecting unit
- 190: Control unit
- UE: 200
- 1001: Processor
- 1002: Memory
- 1003: Storage
- 1004: Communication device
- 1005: Input device
- 1006: Output device
- 1007: Bus

## Claims

1. A radio communication node comprising:
a receiving unit that receives, from a network, configuration information indicating whether or not simultaneous transmission and reception by frequency division multiplexing in a first radio link with an upper node and a second radio link with a lower node is possible; and
a control unit that establishes the first radio link and the second radio link based on the configuration information.

2. The radio communication node according to claim 1, wherein in a case where a type of a time resource to be allocated to the second radio link is not exclusive to the second radio link, the control unit establishes the second radio link by using the time resource when the simultaneous transmission and reception by the frequency division multiplexing is indicated as possible.

3. A radio communication node comprising:
a receiving unit that receives, from a network, resource information indicating types of a time resource and a frequency resource to be allocated to a first radio link with an upper node and a second radio link with a lower node; and
a control unit that performs simultaneous transmission and reception by frequency division multiplexing in the first radio link and the second radio link by using the time resource and the frequency resource in a case where both the type of the time resource and the type of the frequency resource are indicated as available for the second radio link.

4. The radio communication node according to any one of claims 1 to 3, further comprising a transmitting unit that transmits, to the network, capability information indicating whether or not the simultaneous transmission and reception by the frequency division multiplexing is possible.

5. The radio communication node according to any one of claims 1 to 4, wherein the receiving unit receives indication information indicating whether or not frequency bands used for the simultaneous transmission and reception by the frequency division multiplexing overlap each other, or indicating a default operation in the simultaneous transmission and reception.
